# DEMANDE DE BREVET EUROPEEN

(11) **EP 2 444 797 A1**
(43) Date de publication de la demande: **25.04.2012**
(21) Numéro de dépôt: 11185361.0
(22) Date de dépôt: 17.10.2011
(51) Int. Cl.: G01N 27/04, G01N 27/12, G01M 3/16

(54) **Dispositif électrique destiné à détecter l'humidité**

(30) Priorité: 21.10.2010 FR 1058586
(71) Demandeur: Nexans, 75008 Paris (FR)
(72) Inventeur: Tribut, Laurent, 38110 Saint Jean de Soudain (FR); Breton, Yann, 69100 Villeurbanne (FR); Granheim, Ivar, 0575 Oslo (NO)
(74) Mandataire: Peguet, Wilfried

(57) **Abrégé**

La présente invention concerne un dispositif électrique de détection d'humidité comprenant :
- un câble (10a, 10b, 10c) de détection composé d'un premier élément (1) et d'un deuxième élément (2a, 2b, 2c) allongés électriquement conducteurs séparés par un matériau (3) à base de polymère, et
- un appareil de mesure de la résistance électrique destiné à mesurer la résistance électrique entre les premier et deuxième éléments dudit câble,

le dispositif étant caractérisé en ce que le matériau (3) est un matériau non soluble et sensible à l'humidité.

## Description

La présente invention se rapporte à un dispositif électrique de détection de l'humidité comportant un câble de détection.

Elle s'applique typiquement, mais non exclusivement, à un dispositif électrique de grande dimension pouvant être par exemple placé dans une cloison, le long d'un mur ou sous une toiture.

En effet, l'infiltration lente d'humidité dans les murs ou la toiture d'une maison peut entraîner la prolifération de moisissures et autres micro-organismes rendant l'habitation insalubre. La détection du taux d'humidité dans ce type d'éléments à l'aide d'un capteur ponctuel d'humidité est inappropriée dans ce cas précis, et il est donc nécessaire d'utiliser des dispositifs de détection d'humidité sur une longue distance tel qu'un câble de détection.

A titre d'exemple, on peut citer le document WO2010/046886 qui décrit un dispositif électrique permettant de détecter l'humidité et comportant un câble de détection. Ledit câble de détection est composé d'un premier fil électrique et d'un deuxième fil électrique séparés par un matériau polymère.

Ces deux éléments électriquement conducteurs (i.e. fils électriques) sont reliés à une extrémité du câble à un ohmmètre, permettant ainsi de mesurer de façon périodique ou continue la résistance électrique du câble.

Le matériau polymère utilisé est un matériau polymère soluble dans l'eau. Ainsi, lorsque ledit matériau est sec et intact, aucun courant n'est détecté entre les deux fils électriques puisque ces deux fils sont séparés par le matériau polymère qui est électriquement isolant. Dans le cas où le matériau polymère est en contact avec de l'eau, il se dissout et permet aux deux fils électriques de rentrer en contact l'un avec l'autre. Ainsi, la résistance entre les deux fils chute de façon significative et permet d'identifier par exemple une infiltration d'eau.

Toutefois, à cause de la solubilité du matériau polymère, ce dispositif électrique de l'art antérieur ne peut être utilisé plus d'une fois lorsque de l'humidité est déjà entrée en contact avec ledit matériau. Ainsi, le coût d'un tel dispositif se révèle en fin de compte relativement élevé par rapport à son utilisation.

Le but de la présente invention est de pallier les inconvénients des techniques de l'art antérieur en proposant notamment un dispositif électrique économique de détection d'humidité comprenant un câble de détection pouvant être utilisé plusieurs fois tout en garantissant des mesures de résistances électriques fiables et répétables.

La présente invention a pour objet un dispositif électrique de détection d'humidité, comprenant :
- un câble de détection composé d'un premier élément et d'un deuxième élément allongés électriquement conducteurs séparés, et de préférence uniquement séparés, par un matériau à base de polymère, et
- un appareil de mesure de la résistance électrique destiné à mesurer la résistance électrique entre les premier et deuxième éléments dudit câble,
le dispositif étant caractérisé en ce que le matériau à base de polymère (i.e. matériau polymère) est un matériau non soluble et sensible à l'humidité.

On entend par « humidité » de l'eau sous forme liquide et/ou vapeur.

On entend par « matériau non soluble » un matériau qui ne peut sensiblement être solubilisé ou dissout dans un solvant, le solvant étant de préférence de l'eau. En d'autres termes, le matériau ne perd sensiblement pas de masse lorsqu'il est immergé, notamment pendant une période de 24h, dans un solvant, le solvant étant de préférence de l'eau. Ainsi, le matériau polymère de l'invention ne se dégrade pas irréversiblement lorsqu'il est en contact avec ledit solvant.

On entend par « matériau sensible à l'humidité » un matériau qui a les propriétés physico-chimiques nécessaires et suffisantes pour que l'humidité soit adsorbée à sa surface et soit diffusée à travers ledit matériau.

De préférence, la distance séparant les deux éléments allongés est sensiblement constante le long du câble de détection, ou en d'autre terme l'épaisseur du matériau polymère est sensiblement identique le long du câble de détection, afin d'obtenir des mesures de résistance électrique fiables et représentatives de l'environnement dans lequel le câble de détection se trouve.

Le dispositif selon l'invention permet de détecter l'infiltration d'humidité et d'éviter ainsi la prolifération de micro-organismes évoluant dans les environnements humides. Un avantage significatif est qu'il peut être réutilisé une fois l'humidité évaporée du câble de détection tout en garantissant une détection fiable et répétable même après plusieurs détections d'humidité, puisque le matériau polymère qui compose le câble n'est pas soluble, notamment dans l'eau.

Bien entendu, l'appareil de mesure de la résistance électrique se connecte aux deux éléments électriquement conducteurs à l'une des extrémités du câble de détection. Les deux éléments électriquement conducteurs de l'autre extrémité du câble de détection sont quant à eux isolés électriquement, par exemple avec un manchon polymère thermo-rétractable.

Ainsi, lors de l'augmentation du taux d'humidité, la résistance électrique mesurée entre les deux éléments électriquement conducteurs, par l'appareil de mesure de la résistance électrique, diminue : on observe alors une chute ohmique. En effet, l'humidité adsorbée et diffusée au sein du matériau polymère de l'invention crée des « ponts » conducteurs, et ainsi forment un circuit électrique « fermé » entre les deux éléments électriquement conducteurs qui ne sont donc plus « isolés » par le matériau polymère qui les sépare : le matériau polymère devient « électriquement conducteur ».

De préférence, la chute ohmique est de l'ordre d'au moins une décade, de préférence d'au moins deux décades, et de façon particulièrement préférée d'au moins trois décades.

Selon un premier mode de réalisation de l'invention, le premier élément est une âme centrale entourée par une couche dudit matériau polymère.

Selon une première variante de ce premier mode, le deuxième élément est un fil électrique enroulé autour de la couche dudit matériau polymère.

Selon une deuxième variante de ce premier mode, le deuxième élément est une couche métallique ajourée entourant la couche dudit matériau polymère.

Selon un deuxième mode de réalisation, le premier et le deuxième éléments sont deux fils électriques parallèles.

Le matériau à base de polymère, ou matériau polymère, de l'invention peut comprendre un ou plusieurs polymères organiques. Le choix du ou des polymères est de préférence limité aux polymères qui peuvent être mis en oeuvre facilement par extrusion, i.e. polymère extrudable, notamment la température d'extrusion étant inférieure à la température de décomposition ou de dégradation du ou des charges au sein du matériau polymère lorsqu'elles existent.

Ainsi, dans un mode de réalisation préféré, le matériau polymère est extrudé.

En outre, le choix du ou des polymères qui composent le matériau polymère peut être limité par les propriétés mécaniques du matériau polymère que l'on souhaite obtenir au final, notamment au niveau de l'allongement à la rupture du matériau polymère, afin d'éviter la formation de craquelures par exemple lorsque le câble de détection est enroulé autour d'un touret pour son transport.

De préférence, le matériau polymère se compose majoritairement d'un polymère organique ou d'un mélange de polymères organiques.

Le matériau polymère de l'invention peut être de deux types.

Le premier type est tel que le matériau polymère peut comprendre un premier polymère non soluble, de préférence non soluble dans l'eau, associé à une charge déshydratante (i.e. charge sensible à l'humidité). Dans ce cas, le premier polymère peut être plus particulièrement choisi parmi :
- les polymères d'oléfine tels que notamment les polymères d'acétate de vinyle comme par exemple les copolymères d'éthylène et d'acétate de vinyle (EVA), ou les polymères d'éthylène comme par exemple les copolymères d'éthylène et d'octène (PEO), et
- les polycaprolactones,
ou un de leurs mélanges.

Dans un mode de réalisation particulier, le premier type de matériau polymère peut comprendre uniquement une matrice polymère et une ou des charges déshydratantes, la matrice polymère incluant au moins ledit premier polymère, ce dernier étant notamment majoritaire dans ladite matrice.

Le terme « polymère » est utilisé dans la description de façon la plus large possible et peut comprendre autant les copolymères que les homopolymères.

On entend par « charge déshydratante » une charge apte à se déshydrater, notamment sous l'effet d'une élévation de température. La charge déshydratante de l'invention inclut donc les charges hygroscopiques qui ont également cette propriété. La charge déshydratante de l'invention est donc également apte à retenir l'humidité (i.e. absorber l'humidité).

La charge déshydratante de l'invention a donc des propriétés réversibles de relargage d'eau et de rétention d'eau, selon la température environnante du dispositif.

La charge déshydratante peut être une charge organique ou minérale, ou un mélange des deux.

A titre d'exemple, elle peut être choisie parmi le sulfate de calcium anhydre, la cellulose, l'amidon, et l'alcool polyvinylique, ou un de leur mélange.

La quantité de la charge déshydratante dans le matériau polymère de l'invention peut varier en fonction du type de charge utilisé.

La quantité minimale est classiquement définie de sorte à avoir une variation de la résistance électrique significative pour visualiser la présence d'un taux d'humidité relative supérieur au taux d'humidité relative présent dans l'environnement habituel dans lequel doit se trouve ledit câble.

La quantité maximale est typiquement définie de sorte à ce qu'elle n'influence pas de façon néfaste les propriétés mécaniques du matériau polymère, notamment au niveau de son allongement à la rupture, afin d'éviter la formation de craquelures au niveau du matériau polymère, notamment lorsque le câble de détection est enroulé autour d'un touret pour son transport.

A titre d'exemple, la quantité de charge déshydratante peut être d'au moins 5 parties en poids pour 100 parties en poids de polymère(s) dans le matériau polymère, de préférence d'au moins 10 parties en poids pour 100 parties en poids de polymère(s) dans le matériau polymère, et de préférence d'au moins 30 parties en poids pour 100 parties en poids de polymère(s) dans le matériau polymère. Elle peut être également comprise entre 100 et 200 parties en poids pour 100 parties en poids de polymère(s) dans le matériau polymère.

Le deuxième type est tel que le matériau polymère peut comprendre un second polymère non soluble, de préférence non soluble dans l'eau, et sensible à l'humidité : une charge sensible à l'humidité ne devient alors plus nécessaire dans ce type de matériau polymère. Dans ce cas, le second polymère peut être choisi parmi les polymères obtenus à partir d'amidon. On peut citer par exemple le produit référencé Materbi et commercialisé par la société Novamont, qui est un mélange de polymères à base d'amidon et comprenant en outre de la polycaprolactone. L'amidon ne peut donc pas être considéré comme une charge, mais correspond à la matrice polymère en tant que telle du matériau polymère.

Dans un mode de réalisation particulier, le deuxième type de matériau polymère peut comprendre uniquement une matrice polymère, la matrice polymère incluant au moins ledit second polymère, ce dernier étant notamment majoritaire dans ladite matrice.

Bien entendu, un mélange du premier et du deuxième type de matériau polymère peut être envisagé. De la même manière, le premier comme le deuxième type de matériau polymère peuvent comprendre d'autres polymères et/ou d'autres charges.

Par exemple, le matériau polymère de l'invention peut comprendre en outre au moins une charge électriquement conductrice et/ou au moins un polymère électriquement conducteur, permettant ainsi de diminuer la résistance électrique initiale dudit matériau polymère.

Dans la présente invention, on préférera utiliser le premier type de matériau polymère (cf. le premier polymère non soluble associé à la charge déshydratante). Ce premier type (par rapport au deuxième type de matériau polymère) permet avantageusement d'ajuster précisément et facilement les propriétés mécaniques, rhéologiques et la prise en eau du matériau polymère en jouant notamment sur la quantité de charge déshydratante incorporée dans le premier polymère.

L'appareil de mesure de la résistance électrique entre les deux éléments électriquement conducteurs peut être un mégohmmètre.

Dans un mode de réalisation particulier, le dispositif de l'invention peut comprendre en outre un moyen de chauffage. Ce moyen de chauffage est destiné à permettre à l'eau capter au sein du matériau polymère de s'évaporer, et ainsi recouvrer l'état initial du câble avant un nouveau cycle d'adsorption de l'humidité.

Ce moyen de chauffage peut être par exemple un câble chauffant positionné à proximité et le long du câble de détection.

Dans la présente invention, le matériau à base de polymère peut être réticulé ou non réticulé.

Selon une première variante, le matériau à base de polymère n'est pas réticulé. Ainsi, le procédé de fabrication dudit matériau reste simple et facile à mettre en oeuvre.

Selon une seconde variante, le matériau à base de polymère est réticulé par des techniques bien connues de l'homme du métier. Ainsi, même si le procédé de fabrication d'un matériau polymère réticulé nécessite l'utilisation de techniques supplémentaires que celles utilisées pour obtenir simplement un matériau polymère non réticulé, le matériau polymère réticulé présente l'avantage d'être utilisé à des températures beaucoup plus élevées qu'un matériau polymère non réticulé, notamment lorsque le dispositif de l'invention comprend ledit moyen de chauffage. A des températures plus élevées de chauffe, l'évaporation de l'eau captée au sein du matériau polymère réticulé sera donc plus rapide. Typiquement, les liaisons créées lors de la réticulation permettent au matériau polymère réticulé d'être beaucoup moins sensible à la température.

D'autres caractéristiques et avantages de la présente invention apparaîtront à la lumière des exemples qui vont suivre en référence aux figures annotées, lesdits exemples et figures étant donnés à titre illustratif et nullement limitatif.
La figure 1 représente une vue en perspective d'une première variante d'un premier mode de réalisation d'un câble de détection selon l'invention.
La figure 2 représente une vue en perspective d'une deuxième variante d'un premier mode de réalisation d'un câble de détection selon l'invention.
La figure 3 représente une vue en perspective d'un deuxième mode de réalisation d'un câble de détection selon l'invention.
La figure 4 représente une vue en perspective du câble de détection de la figure 3 comportant en outre un câble chauffant.
La figure 5 représente l'évolution de la résistance électrique en fonction du temps d'un câble de détection comprenant un premier exemple de matériau polymère selon l'invention, pour différents taux d'humidité relative.
La figure 6 représente l'évolution de la résistance électrique en fonction du temps d'un câble de détection comprenant un deuxième exemple de matériau polymère selon l'invention, pour différents taux d'humidité relative.

Pour des raisons de clarté, les mêmes éléments ont été désignés par des références identiques. De même, seuls les éléments essentiels pour la compréhension de l'invention ont été représentés de manière schématique, et ceci sans respect de l'échelle.

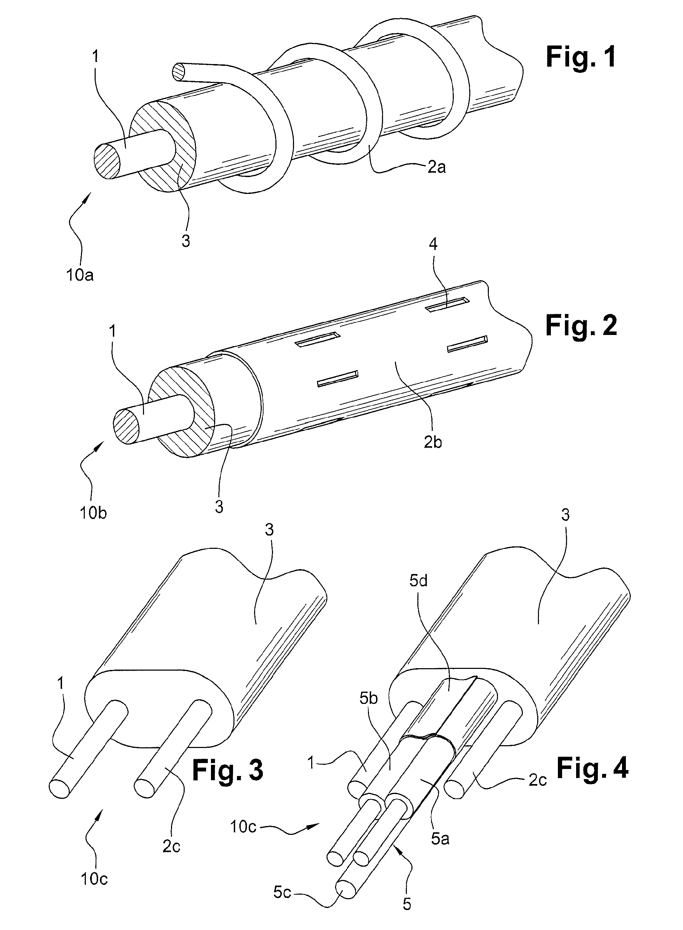

La figure 1 représente une vue en perspective d'une première variante d'un premier mode de réalisation d'un câble 10a de détection selon l'invention.

Ce câble comprend un premier fil électrique 1 central entouré par une couche 3 extrudé d'un matériau polymère conforme à l'invention, d'épaisseur sensiblement constante tout le long du câble. Un second fil électrique 2a entoure hélicoïdalement la couche 3. Les spires de l'hélice du second fil électrique sont régulières tout le long du câble.

La figure 2 représente une vue en perspective d'une deuxième variante d'un premier mode de réalisation d'un câble 10b de détection selon l'invention.

Ce câble comprend un premier fil électrique 1 central entouré par une couche 3 extrudé d'un matériau polymère conforme à l'invention, d'épaisseur sensiblement constante tout le long du câble. Une couche métallique du type tube entoure la couche 3, cette couche étant ajourée par des ouvertures 4 positionnées de façon régulière tout le long du câble.

De préférence, les câbles de détection de la présente invention, tels que par exemple ceux représentés aux figures 1 à 4, ne comprennent pas de gaine extérieure de protection entourant les premier et deuxième éléments allongés électriquement conducteurs ainsi que le matériau polymère.

De façon plus particulière, le câble de détection de l'invention comprend uniquement les premiers et deuxième éléments allongés électriquement conducteurs et le matériau polymère.

Dans le cas où le câble de détection de l'invention comprendrait ladite gaine de protection, il est essentielle que ses propriétés physico-chimiques et/ou que sa structure permettent à l'eau de rentrer en contact avec le matériau polymère. Par exemple, cette gaine de protection peut comporter des trous et/ou être réalisée à partir d'un matériau sensible à l'eau.

La figure 3 représente une vue en perspective d'un deuxième mode de réalisation d'un câble 10c de détection selon l'invention.

Ce câble comprend un premier fil électrique 1 et un second fil électrique 2c sensiblement parallèle tout le long du câble. Ces deux fils 1 et 2c sont d'une part, séparés par une épaisseur sensiblement constante tout le long du câble d'un matériau polymère 3 extrudé conforme à l'invention, et d'autre part, recouverts par une couche dudit matériau polymère 3. Le matériau polymère 3 séparant les deux fils et les recouvrant est obtenu par extrusion.

La figure 4 représente une vue en perspective du câble 10c de détection de la figure 3, comportant en outre un câble chauffant 5.

Le câble chauffant 5 se trouve entouré par le matériau polymère 3, et comporte deux fils conducteurs électriques isolés 5a, 5b, et un fil conducteur électrique non isolé 5c, ces trois fils étant entourés par une enveloppe métallique 5d. Le fil conducteur électrique non isolé 5c est relié à la terre et en contact avec l'enveloppe métallique 5d.

Le câble chauffant permet avantageusement d'évacuer de façon optimale l'humidité résiduelle contenue dans le matériau polymère et ainsi ramener rapidement le câble de détection dans son état initial avec peu ou pas d'eau résiduelle (i.e. avant la détection d'humidité).

Bien entendu, ce mode de réalisation n'est nullement limitatif, et l'on pourrait très bien envisagé par exemple d'avoir ledit câble chauffant à l'extérieur du câble de détection.

### Exemples

Un câble de détection tel que représenté sur la figure 3 est réalisé avec de deux fils de cuivre de section 1,5 mm² disposé parallèlement à l'intérieur d'un premier exemple de matériau polymère non soluble et sensible à l'humidité, la distance entre les deux fils de cuivre est maintenue constante à 1 mm. L'épaisseur de la couche de matériau polymère recouvrant les deux fils est également de 1 mm. Ledit matériau polymère, extrudé autour de ces deux fils de cuivre, est constitué :
- d'un copolymère d'éthylène et d'acétate de vinyle à 28% de groupements acétate de vinyle, commercialisé par la société Exxon Mobil sous la référence Escorène UL 0328, et
- d'environ 150 parties en poids d'une charge minérale déshydratante telle que le sulfate de calcium anhydre commercialisé par la société WA Hammond Drierite LTD, sous la référence Drierite.

Le câble de détection ainsi obtenu a une longueur de 5 mètres. Les deux fils de cuivre d'une des extrémités du câble de détection sont reliés à un mégohmmètre afin de mesurer la résistance électrique entre les deux fils de cuivre. Le câble de détection ensemble avec le mégohmmètre forme un dispositif électrique de détection selon l'invention.

Le câble de détection est introduit dans une enceinte climatique à taux contrôlé d'humidité relative, et la mesure de résistance électrique entre les deux fils de cuivre est réalisée au cours du temps sur 24 heures. La température est maintenue constante à 25°C.

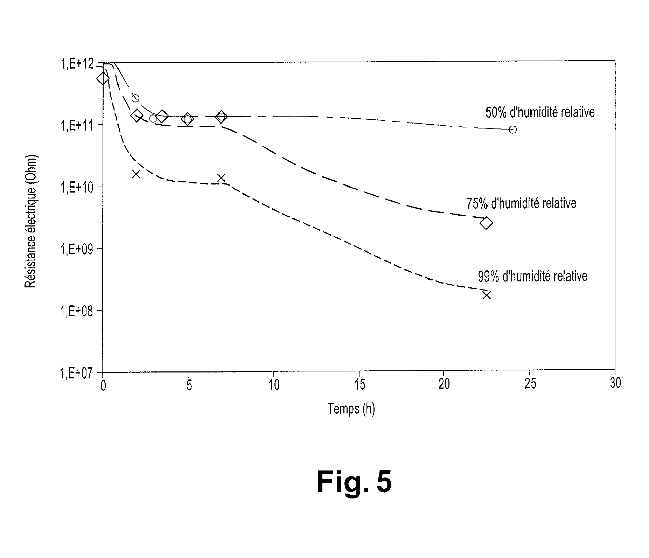

La figure 5 représente l'évolution de la résistance électrique en fonction du temps du câble de détection tel que décrit ci-avant et représenté sur la figure 3, pour différents taux d'humidité relative. L'humidité relative est le rapport entre la pression de vapeur d'eau présente dans l'air considéré (pression partielle de l'eau dans l'air) et la valeur de pression saturante théorique. Elle est exprimée en pourcentage.

Sur la figure 5, la résistance électrique initiale du câble de détection est de l'ordre de 1x10¹² Ohm. Cette valeur correspond à la référence des mesures avec un taux d'humidité relative de l'ordre de 40%.

Pour un taux d'humidité relative de 99%, la résistance passe du téra-ohm à la centaine de méga-ohm soit une chute de 4 décades de la résistance électrique. Pour un taux d'humidité relative de 75%, la chute de la résistance électrique est de l'ordre de 3 décades, et pour un taux d'humidité relative de 50%, la chute n'est plus que de 1 décade.

De préférence, les taux d'humidité relative critiques que l'on souhaite détecter sont compris entre 80 et 100%.

Des essais de réversibilité ont également été effectués. Ces essais consistent à placer le câble de détection à 25°C, avec un taux d'humidité de 99% pendant 24h (i.e. cycle 1). Des mesures de résistance électrique sont effectuées à 0, 2, 5, 7 et 24h.

Une fois le cycle 1 de 24h terminé, le câble est séché pendant 24h à 60°C dans une étuve avec une humidité relative de 40%. Puis, un nouveau cycle (i.e. cycle 2), identique au cycle 1, est réalisé.

Les résultats sont rassemblés dans le tableau 1 ci-dessous.

**Tableau 1**

| **Cycle 1** | | **Cycle 2** | |
|---|---|---|---|
| **Temps (h)** | **Résistance électrique (ohm)** | **Temps (h)** | **Résistance électrique (ohm)** |
| 0 | 9,00E+11 | 0 | 2,52E+12 |
| 2 | 1,60E+10 | 2 | 1,70E+10 |
| 5 | 1,17E+10 | 5 | 1,25E+10 |
| 7 | 1,35E+10 | 7 | 1,30E+10 |
| 24 | 1,63E+08 | 24 | 1,01E+08 |

D'autres essais de réversibilité consistent à placer le câble de détection à 25°C, avec un taux d'humidité de 75% pendant 24h (i.e. cycle 1). Des mesures de résistance électrique sont effectuées à 0, 2, 5, 7 et 24h.

Une fois le cycle 1 de 24h terminé, le câble est séché pendant 24h à 60°C dans une étuve avec une humidité relative de 40%. Puis, un nouveau cycle (i.e. cycle 2), identique au cycle 1, est réalisé.

Les résultats sont rassemblés dans le tableau 2 ci-dessous.

**Tableau 2**

| **Cycle 1** | | **Cycle 2** | |
|---|---|---|---|
| **Temps (h)** | **Résistance électrique (ohm)** | **Temps (h)** | **Résistance électrique (ohm)** |
| 0 | 5,62E+11 | 0 | 5,62E+11 |
| 2 | 1,38E+11 | 2 | 1,65E+11 |
| 5 | 1,27E+11 | 5 | 1,16E+11 |
| 7 | 1,30E+11 | 7 | 1,03E+11 |
| 24 | 2,50E+09 | 24 | 2,50E+09 |

D'autres essais de réversibilité consistent à placer le câble de détection à 25°C, avec un taux d'humidité de 40% pendant 24h (i.e. cycle 1). Des mesures de résistance électrique sont effectuées à 0, 2, 5, 7 et 24h.

Une fois le cycle 1 de 24h terminé, le câble est séché pendant 24h à 60°C dans une étuve avec une humidité relative de 40%. Puis, un nouveau cycle (i.e. cycle 2), identique au cycle 1, est réalisé.

Les résultats sont rassemblés dans le tableau 3 ci-dessous.

**Tableau 3**

| **Cycle 1** | | **Cycle 2** | |
|---|---|---|---|
| **Temps (h)** | **Résistance électrique (ohm)** | **Temps (h)** | **Résistance électrique (ohm)** |
| 0 | 1,00E+12 | 0 | 1,84E+12 |
| 2 | 1,52E+11 | 2 | 2,81E+11 |
| 5 | 1,25E+11 | 5 | 1,21E+11 |
| 7 | 1,07E+11 | 7 | 1,27E+11 |
| 24 | 8,90E+10 | 24 | 8,30E+10 |

Les résultats des tableaux 1 à 3 permettent de montrer que le câble de détection de l'invention peut être réutilisé une fois séché, puisque la résistance électrique initiale (à 0h) d'une part, et après 24h d'autre part, en atmosphère humide (99%, 75% ou 40% d'humidité relative), sont sensiblement identiques entre le cycle 1 et le cycle 2.

Un câble de détection tel que représenté sur la figure 3 est réalisé avec de deux fils de cuivre de section 1,5 mm² disposé parallèlement à l'intérieur d'un deuxième exemple de matériau polymère non soluble et sensible à l'humidité, la distance entre les deux fils de cuivre est maintenue constante à 0,24 mm. L'épaisseur de la couche de matériau polymère recouvrant les deux fils est de 1 mm. Ledit matériau polymère, extrudé autour de ces deux fils de cuivre, est constitué :
- de 70% en poids d'une polycaprolactone, commercialisé par la société Perstorp, sous la référence CAPA 6800, et
- de 30% en poids d'une charge organique déshydratante telle que l'alcool polyvinylique, commercialisé par la société Kuraray, sous la référence Kuraray CP1220T10.

Le câble de détection ainsi obtenu a une longueur de 5 mètres. Les deux fils de cuivre d'une des extrémités du câble de détection sont reliés à un mégohmmètre afin de mesurer la résistance électrique entre les deux fils de cuivre. Le câble de détection ensemble avec le mégohmmètre forme un dispositif électrique de détection selon l'invention.

Le câble de détection est introduit dans une enceinte climatique à taux contrôlé d'humidité relative, et la mesure de résistance électrique entre les deux fils de cuivre est réalisée au cours du temps sur 48 heures. La température est maintenue constante à 25°C.

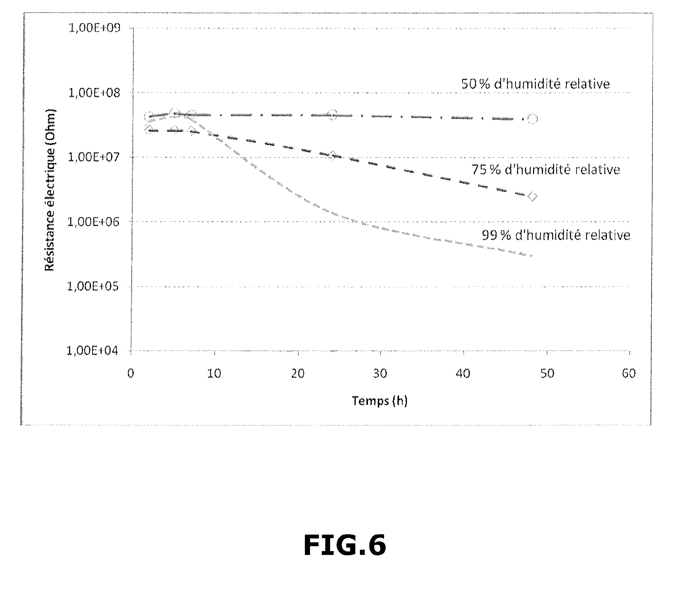

La figure 6 représente l'évolution de la résistance électrique en fonction du temps du câble de détection tel que décrit ci-avant et représenté sur la figure 3, pour différents taux d'humidité relative. L'humidité relative est le rapport entre la pression de vapeur d'eau présente dans l'air considéré (pression partielle de l'eau dans l'air) et la valeur de pression saturante théorique. Elle est exprimée en pourcentage.

Sur la figure 6, la résistance électrique initiale du câble de détection est de l'ordre de 20 MOhm (megaohm). Cette valeur correspond à la référence des mesures avec un taux d'humidité relative de l'ordre de 40%.

Pour un taux d'humidité relative de 99%, la résistance passe du 20 Mohm à 200 KOhm (kiloohm) soit une chute de 2 décades de la résistance électrique. Pour un taux d'humidité relative de 75%, la chute de la résistance électrique est de l'ordre de 1 décade, et pour un taux d'humidité relative de 50%, la chute est inférieure à 1 décade.

De préférence, les taux d'humidité relative critiques que l'on souhaite détecter sont compris entre 80 et 100%

## Revendications

1. Dispositif électrique de détection d'humidité comprenant :
- un câble (10a, 10b, 10c) de détection composé d'un premier élément (1) et d'un deuxième élément (2a, 2b, 2c) allongés électriquement conducteurs séparés par un matériau (3) à base de polymère, et
- un appareil de mesure de la résistance électrique destiné à mesurer la résistance électrique entre les premier et deuxième éléments dudit câble,
le dispositif étant **caractérisé en ce que** le matériau (3) est un matériau non soluble et sensible à l'humidité.

2. Dispositif selon la revendication 1, **caractérisé en ce que** le premier élément est une âme centrale (1) entourée par une couche dudit matériau (3).

3. Dispositif selon la revendication 2, **caractérisé en ce que** le deuxième élément est un fil électrique (2a) enroulé autour de la couche dudit matériau (3).

4. Dispositif selon la revendication 2, **caractérisé en ce que** le deuxième élément est une couche métallique (2b) ajourée entourant la couche dudit matériau (3).

5. Dispositif selon la revendication 1, **caractérisé en ce que** le premier et le deuxième éléments sont deux fils électriques (1, 2c) parallèles.

6. Dispositif selon l'une quelconque des revendications précédentes, **caractérisé en ce que** le matériau (3) est extrudé.

7. Dispositif selon l'une quelconque des revendications précédentes, **caractérisé en ce que** le matériau (3) comprend un premier polymère associé à une charge déshydratante.

8. Dispositif selon la revendication 7, **caractérisé en ce que** le premier polymère est choisi parmi les polymères d'oléfine, et les polycaprolactones, ou un de leurs mélanges.

9. Dispositif selon la revendication 7, **caractérisé en ce que** la charge déshydratante est choisie parmi le sulfate de calcium anhydre, la cellulose, l'amidon, et l'alcool polyvinylique, ou un de leur mélange.

10. Dispositif selon l'une quelconque des revendications précédentes, **caractérisé en ce que** le matériau (3) comprend un second polymère non soluble et sensible à l'humidité.

11. Dispositif selon la revendication 10, **caractérisé en ce que** le second polymère est choisi parmi les polymères obtenus à partir d'amidon.

12. Dispositif selon les revendications 7 à 11, **caractérisé en ce que** le matériau (3) comprend en outre au moins une charge électriquement conductrice et/ou un polymère électriquement conducteur.

13. Dispositif selon l'une quelconque des revendications précédentes, **caractérisé en ce qu'**il comprend en outre un moyen de chauffage.
